Europäisches Patentamt

European Patent Office

Office européen des brevets

(19)

(11) **EP 0 761 491 B1**

(12) **EUROPEAN PATENT SPECIFICATION**

(45) Date of publication and mention
of the grant of the patent:
**07.06.2000 Bulletin 2000/23**

(51) Int Cl.⁷: **B60K 41/16**, E02F 9/22
// F16H59:06

(21) Application number: **96203233.0**

(22) Date of filing: **27.03.1992**

(54) **Control device for hydraulically propelled work vehicle**

Steuervorrichtung für eine hydraulisch angetriebene Baumaschine

Dispositif de commande pour engin de travail à propulsion hydraulique

(84) Designated Contracting States:
**DE FR GB IT SE**

(30) Priority: **29.03.1991 JP 9173991**

(43) Date of publication of application:
**12.03.1997 Bulletin 1997/11**

(62) Document number(s) of the earlier application(s) in
accordance with Art. 76 EPC:
**92907340.1 / 0 530 380**

(73) Proprietor: **HITACHI CONSTRUCTION
MACHINERY CO., LTD.
Chiyoda-ku Tokyo 100-0004 (JP)**

(72) Inventors:
• **Hosono, Junichi
Niihari-gun, Ibaraki 315 (JP)**
• **Kihara, Mitsuo
Niihari-gun, Ibaraki 315 (JP)**

• **Tatsumi, Akira
Kashiwa-shi, Chiba 277 (JP)**
• **Tamura, Seiji
Nishiibaraki-gun, Ibaraki 309-17 (JP)**
• **Asano, Kazuo
Tsuchiura-shi, Ibaraki 300 (JP)**
• **Ichimura, Kazuhiro
Niihari-gun, Ibaraki 315 (JP)**
• **Sayama, Hideaki
Tsuchiura-shi, Ibaraki 300 (JP)**
• **Yoshio, Saburo
Niihari-gun, Ibaraki 315 (JP)**

(74) Representative:
**Smulders, Theodorus A.H.J., Ir. et al
Vereenigde
Postbus 87930
2508 DH Den Haag (NL)**

(56) References cited:
**EP-A- 0 214 633       US-A- 4 726 186**

EP 0 761 491 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Field of Art

The present invention relates to a control device for a hydraulically propelled work vehicle in which a hydraulic motor for vehicle propulsion is driven by a variable displacement hydraulic pump.

Background Art

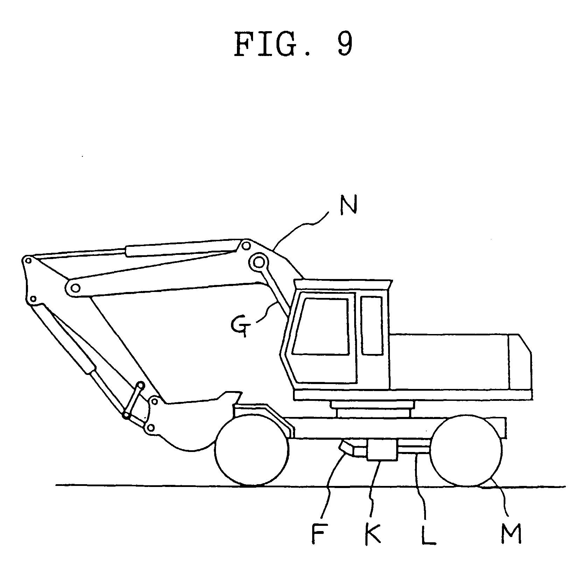

As a hydraulically propelled work vehicle equipped with this type of control device, there is for example a wheel type hydraulic shovel such as that shown in Fig. 9. Referring to that figure, the symbol F denotes a hydraulic motor for vehicle propulsion, and rear wheels M are driven by the rotation of this hydraulic motor F, via a transmission K and a propeller shaft L, so as to propel the vehicle. Further, a boom N, which forms one portion of a front attachment, is raised and lowered by the extension and contraction of a boom cylinder G.

In this type of a hydraulically propelled work vehicle, Japanese Patent Laying Open Publication Showa 63-167042 discloses a hydraulic control device that controls a horsepower of an engine according to load so that a fuel consumption is improved. However, the case of descending a slope is not considered in the control device according to JP-A-63-167042, the rate of the fuel consumption is not good when the vehicle is descending down a slope.

Disclosure of Invention

The object of the present invention is to provide a control device for a hydraulically propelled work vehicle which improves the rate of the fuel consumption when the vehicle is descending down a slope.

The present invention is applied to a control device for a hydraulically propelled work vehicle which comprises an engine revolution speed control means which controls the revolution speed of an engine; a variable displacement type hydraulic pump which is driven by the engine; a displacement variation means which varies the displacement of this variable displacement hydraulic pump; a displacement control means which determines a target displacement according to the operational state of the pump, and drive controls the displacement variation means; and, a hydraulic motor for vehicle propulsion which is driven by hydraulic fluid ejected from the variable volume type hydraulic pump.

The above described objective is attained by a construction according to claim 1, as will now be described.

There is provided a slope descending detection means which detects when the vehicle is descending down a slope, and, when it is detected by this detection means that the vehicle is descending down a slope, along with a means for engine revolution speed control lowering the revolution speed of the engine, a displacement control means limits the maximum displacement of the hydraulic pump to a value higher than during vehicle propulsion on level ground at a constant speed. According to this, because the engine revolution speed when the vehicle is descending down a slope is decreased from its value during vehicle propulsion on level ground and also the displacement is increased above its value during vehicle propulsion on level ground at a constant speed, thereby the output power of the engine is optimally matched with the power consumed by the hydraulic pump, and accordingly the specific fuel consumption when the vehicle is being propelled down a slope is improved.

According to the invention of claim 2, there is provided a slope ascending detection means which detects when the vehicle is ascending up a slope, and the displacement control means, when this detection means detects that the vehicle is ascending up a slope, along with the engine revolution speed control means increasing the revolution speed of the engine, limits the maximum displacement of the hydraulic pump to a value lower than during vehicle propulsion on level ground at a constant speed. According to this, also when the vehicle is ascending up a slope, the output power of the engine is optimally matched with the power consumed by the hydraulic pump, and accordingly the specific fuel consumption, not only when the vehicle is being propelled down a slope but also when the vehicle is ascending up a slope, is improved.

Brief Description of Drawings

Fig. 1A is a figure showing the P-Q characteristic of a hydraulic pump shown in Fig. 2;
Fig. 1B is a figure showing the P-Q characteristic of a prior art hydraulic pump;
Fig. 2 is a figure showing the overall construction of a hydraulic drive control device according to the present invention;
Fig. 3 is an enlarged figure showing a portion of Fig. 2;
Fig. 4 is a detailed block diagram of a tilt angle control circuit section included in a controller shown in Fig. 2;
Fig. 5 is a detailed block diagram of an engine revolution speed control device included in a controller shown in Fig. 2;
Fig. 6 is a flow chart for the case when a delay control circuit and a servo control circuit of Fig. 5 are realized by a program;
Fig. 7A is a graph showing the motor volumetric efficiency, the motor torque efficiency, etc.;
Fig. 7B is a graph showing the relation between the motor displacement and the output torque;
Fig. 8 is a graph showing variation of the propulsion force as related to variation of the displacement;

Fig. 9 is a side view of a wheel type hydraulic shovel;

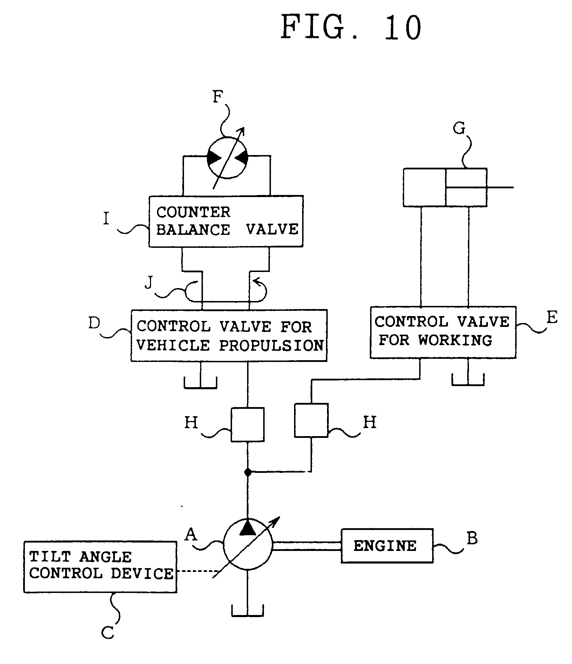

Fig. 10 is a general view of a hydraulic fluid pressurization device for a wheel type hydraulic shovel, which expels pressurized hydraulic fluid, both for vehicle propulsion and for performing work, from a single pump;

Fig. 11 is a block diagram showing the details of another embodiment of the tilt angle control circuit section;

Fig. 12 is a block diagram showing the details of another embodiment of the engine revolution speed control circuit section;

Fig. 13 is a flow chart for the case when a servo control circuit of Fig. 12 is realized by a program;

Fig. 14A is a figure giving a P-Q graph when the vehicle is being propelled on the level ground;

Fig. 14B is a figure giving a P-Q graph when the vehicle is being propelled up a slope;

Fig. 14C is a figure giving a P-Q graph when the vehicle is being propelled down a slope;

Fig. 15 is a graph showing the improved specific fuel consumption when the vehicle is being propelled down a slope;

Fig. 16A is a P-Q graph for explanation of the prior art;

Fig. 16B is a P-Q graph for explanation of the prior art;

Fig. 17 is an N-Q graph for explanation of the prior art;

Fig. 18 is a graph for explanation of the specific fuel consumption in the prior art; and

Fig. 19 is a P-Q graph for intending the prior art specific fuel consumption to be improved when the vehicle is being propelled on level ground and when it is being propelled up a slope.

Best Mode for Carrying Out the Invention

- Embodiment 1 -

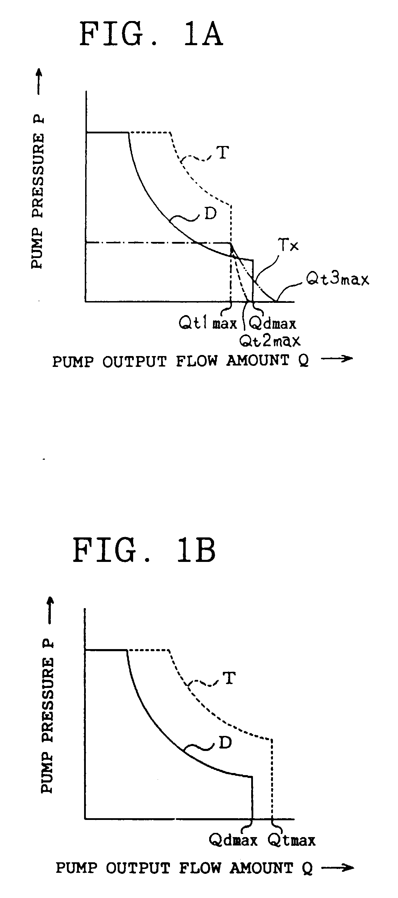

An embodiment of the present invention will now be explained with reference to Figs. 1 through 8.

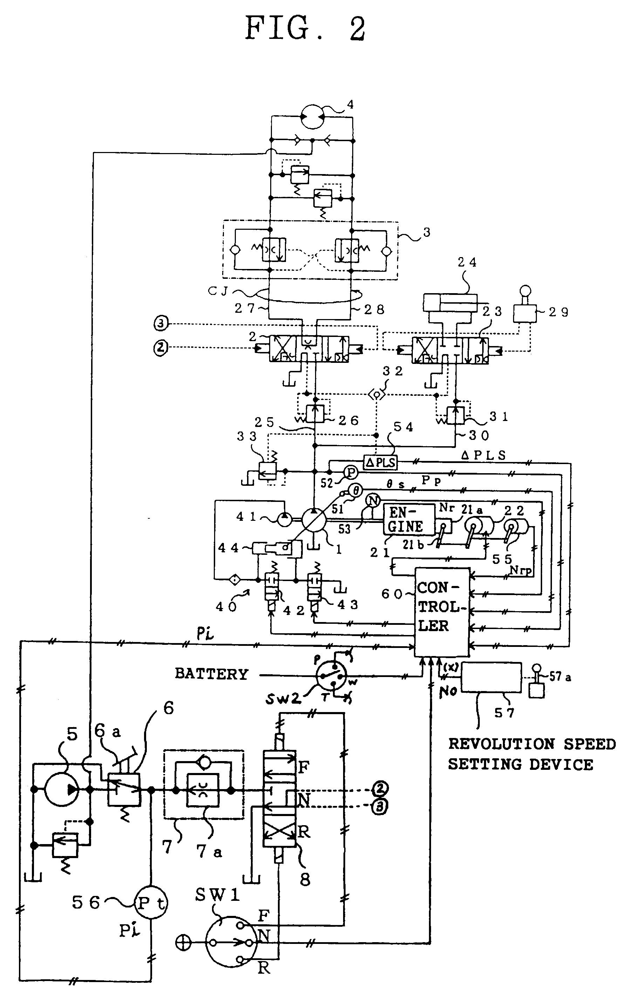

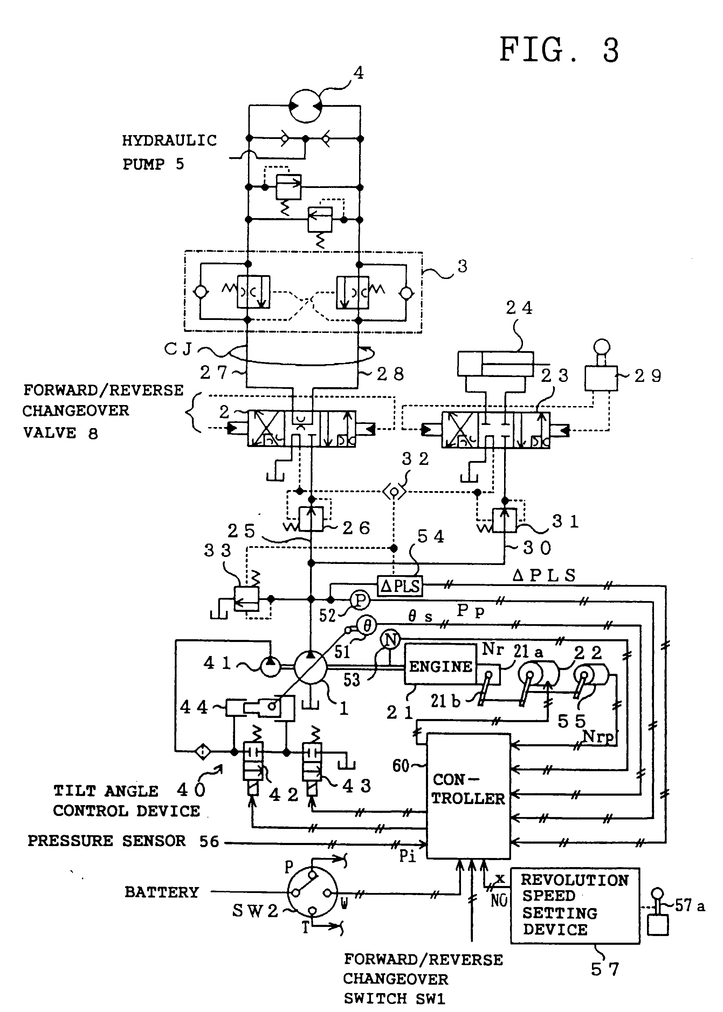

Fig. 2 is a figure showing the overall construction of a control device for a wheel type hydraulic shovel, according to the present invention, and Fig. 3 is a figure showing an enlarged portion of Fig. 2.

With reference to Figs. 2 and 3, the revolution speed of the engine 21 is controlled by a governor lever 21b of a governor 21a being rotated by a pulse motor 22 according to operation of a fuel lever 57a or according to the amount by which a vehicle driving pedal 6a is stepped upon. The details of this control will be explained hereinafter. A variable displacement hydraulic pump 1 is driven by the rotation of this engine 21, and the hydraulic fluid ejected from it is conducted to a hydraulic motor 4 via a control valve for vehicle propulsion 2, a center joint CJ, and a counterbalance valve 3, and also is conducted via a control valve for performing work 23 to a hydraulic cylinder 24 for driving a boom. In this construction, the counterbalance valve 3 and the hydraulic motor for vehicle propulsion 4 which are shown in the figures as higher than the center joint CJ are disposed in a lower moving body portion of the hydraulic shovel, while the control valve for vehicle propulsion 2, the hydraulic pump 1, and the engine 21 etc. which are shown in the figures as lower than the center joint CJ are disposed in an upper rotating body portion thereof.

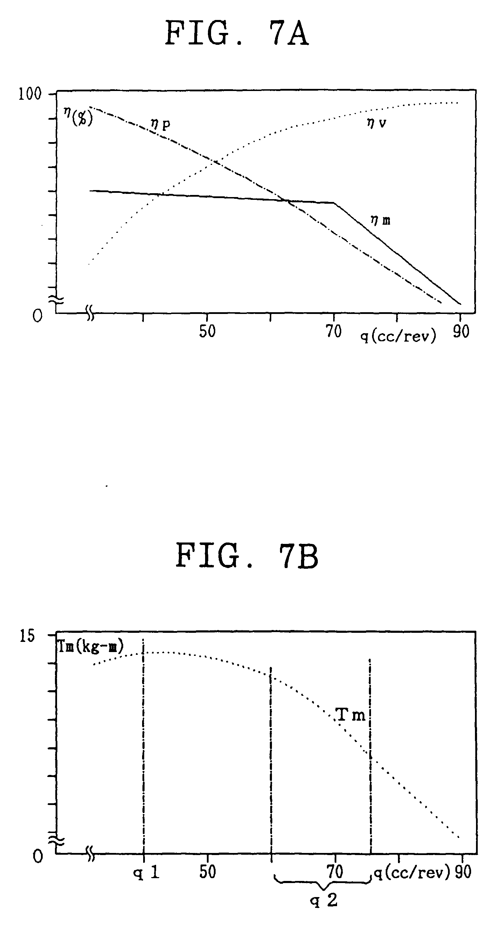

Fig. 7A is a graph displaying motor displacement along the horizontal axis and volumetric efficiency $\eta v$, torque efficiency $\eta m$, and efficiency $\eta p$ related to hydraulic pressure loss in the vehicle propulsion hydraulic circuit along the vertical axis. Fig. 7B is a graph displaying motor displacement along the horizontal axis and output torque of the motor for vehicle propulsion along the vertical axis. The Fig. 7B graph shows the torque line for pump maximum flow amount during vehicle propulsion. Now, if only output torque is to be considered, with regard to pump output flow amount during vehicle propulsion, the maximum efficiency is attained when the displacement is q1. However, from the point of view of consideration of heat balance, the displacement should not be made excessively small. Accordingly one should choose the maximum value for displacement to be q2, in order simultaneously to satisfy the considerations of efficiency and heat balance. With regard to pump output flow amount while performing work, because heat balance does not present so much of a problem, a displacement (>q2) suitable for the highest efficiency should be chosen as its maximum value. If it is possible to provide a large hydraulic fluid cooler, then it is possible to choose the displacement q1 which is best for efficiency also during vehicle propulsion.

As shown in Fig. 2, the control valve for vehicle propulsion 2 is controlled to switch over by a pilot hydraulic pressure supplied from a pilot hydraulic pressure circuit for vehicle propulsion made up from a hydraulic pump 5, a pilot valve 6, a slow return valve 7, and a forward/reverse changeover valve 8. For example, if the forward/reverse changeover valve 8 is shifted to its forward propulsion position (the F position) and the pedal 6a of the pilot valve 6 is operated, along with the engine revolution speed being controlled according to this amount by which the pedal is stepped upon, the output pressure from the hydraulic pump 5 is supplied to the pilot port of the pilot type control valve 2, and this control valve 2 is shifted through a stroke amount determined according to the pilot hydraulic pressure. By this, the hydraulic fluid ejected from the variable displacement hydraulic pump 1 is supplied to the hydraulic motor 4 through the conduit 25, the pressure compensation valve 26, the control valve 2, the conduits 27 or 28 and the counterbalance valve 3, and thereby the vehicle is propelled. The speed of the vehicle depends upon the amount of depression of the vehicle driving pedal 6a.

A control valve for performing work 23 is shifted by the operation of a pilot valve for performing work 29, and hydraulic fluid ejected from the hydraulic pump 1 is conducted to a hydraulic cylinder for driving a boom 24 via a conduit 30, a pressure compensation valve 31 and the control valve 23; and a boom N, shown in Fig. 9, is raised and lowered by the extension and shortening of the hydraulic cylinder 24. In this construction, the pressure compensation valves 26 and 31 are for ensuring that a hydraulic pressure is supplied from the hydraulic pump 1 to each of the hydraulic motor 4 and the hydraulic cylinder 24 which is higher than the corresponding load pressure by just a predetermined amount, so that by this both of the actuators can be operated independently.

The tilt angle of the variable displacement hydraulic pump 1, i.e. the displacement thereof, is controlled by a tilt angle variation device 40. This tilt angle variation device 40 is made up from a hydraulic pump 41 which is driven by the engine 21, a pair of electromagnetic valves 42 and 43, and a servo cylinder 44 the position of the piston of which is controlled by pressurized hydraulic fluid from the hydraulic pump 41 according to the shifting of the electromagnetic valves 42 and 43; and the tilt angle of the hydraulic pump 1 is controlled by the position of the piston of the servo cylinder 44. With this construction, the shifting of the pair of electromagnetic valves 42 and 43 is controlled by a controller 60.

The forward/reverse changeover valve 8 is of an electromagnetic type, and, according to a forward/reverse changeover switch SW1 which is provided at the driver's seat of the vehicle being shifted from its N position to its F position or to its R position, said forward/reverse changeover valve 8 is correspondingly shifted from its N position respectively to its F position or to its R position. When this forward/reverse changeover switch SW1 is at its N position, then it provides a high level signal as its output. The reference numeral SW2 denotes a brake switch, which is shifted to its W position for performing work, while it is shifted to its T position for vehicle propulsion. When the brake switch SW2 is operated so as to be shifted to its W position, then both a parking brake and a service brake, not shown in the figures, are actuated; while, on the other hand, when said brake switch SW2 is operated so as to be shifted to its T position, then the parking brake is not actuated, and the service brake can be actuated by the operation of a brake pedal. When the brake switch SW2 is at its W position, then it provides a high level signal as its output.

The reference numeral 51 denotes a tilt angle sensor which detects the tilt angle θs of the hydraulic pump 1, while 52 is a pressure sensor which detects the output pressure Pp of the hydraulic pump 1, 53 is a revolution speed sensor which detects the revolution speed Nr of the engine 21, and 54 is a pressure difference sensor which detects the pressure difference Δpls between the output pressure of the hydraulic pump 1 and the value of the maximum load pressure of the actuators fed thereby (i.e., the larger one of the load pressure of the hydraulic motor 4 and the load pressure of the hydraulic cylinder 24, the larger pressure being the one selected according to the operation of a shuttle 32). Further, the reference numeral 55 denotes a potentiometer which detects the amount Nrp of rotational movement of the governor 21b, while 56 is a pressure sensor which detects the pressure Pi which is produced by the pilot valve 6 according to the amount by which the vehicle driving pedal 6a is operated. The results output from each of these sensors and the output signals from the above forward/reverse changeover switch SW1 and from the brake switch SW2 are input to the controller 60. The reference numeral 57 denotes a revolution speed setting device on which a target revolution speed value No is commanded, according to the manual operation of the fuel lever 57a, and the command signal therefrom is input to the controller 60.

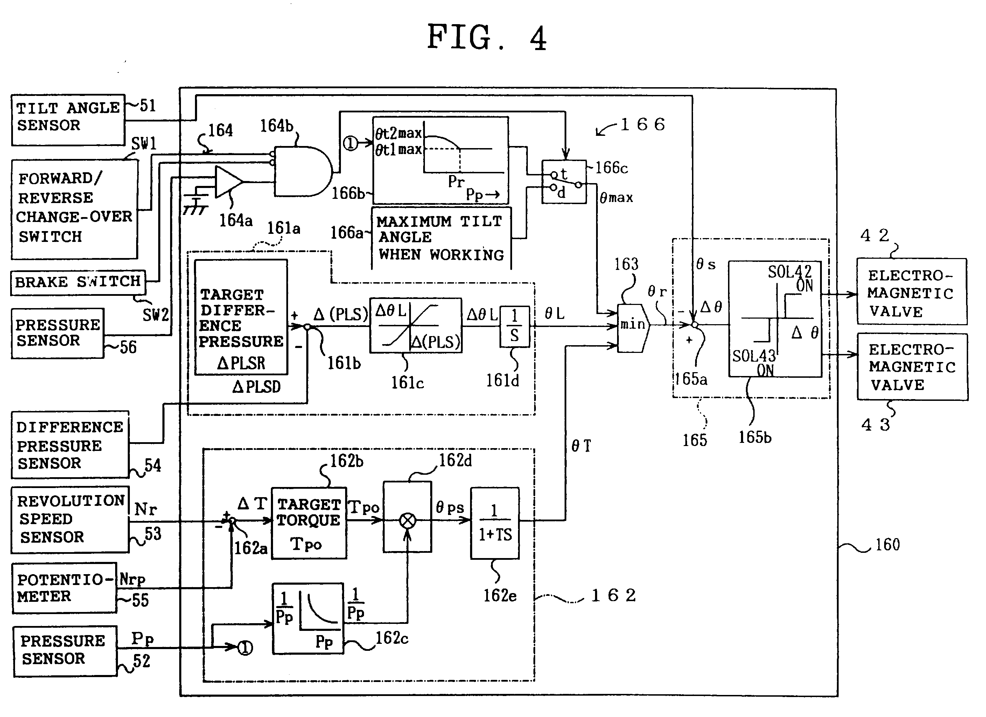

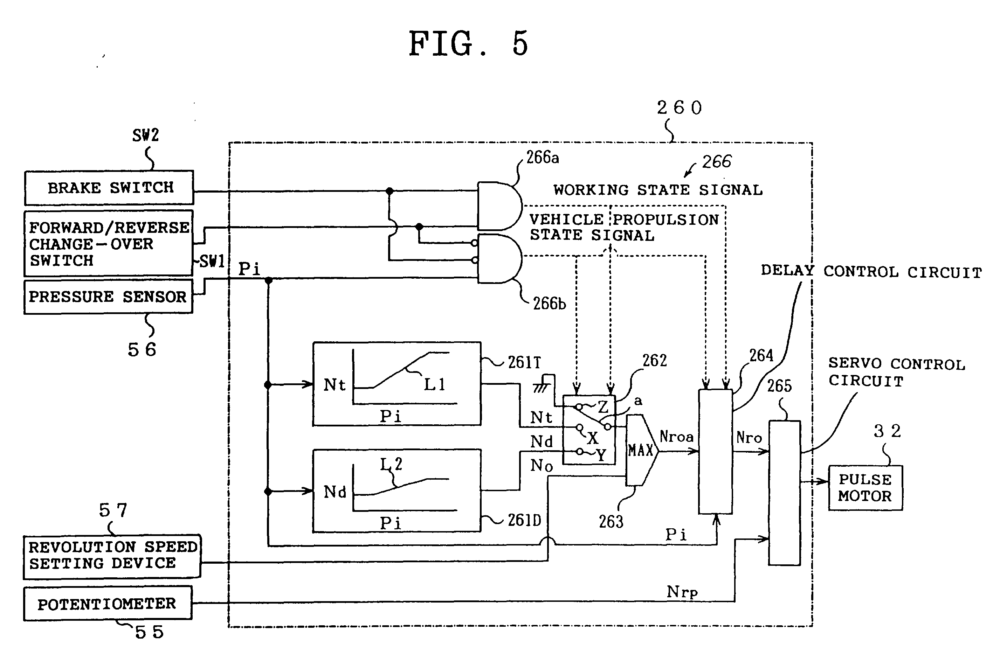

The controller 60 incorporates a tilt angle control circuit section 160 as shown in Fig. 4 and an engine revolution speed control circuit section 260 shown in Fig. 5. The tilt angle control circuit section 160 is made up from a load sensing control section 161 (hereinafter referred to as the LS control section), a torque control section 162, a minimum value selection section 163, a decision section 164 which is made up from a comparator 164a and an AND gate circuit 164b, a servo control section 165, and a maximum tilt angle setting circuit 166. The engine control circuit section 260 will be described hereinafter.

The LS control section 161 comprises a target pressure difference ΔPLSR setting section 161a, a deviation calculation device 161b which calculates the deviation Δ(PLS) between the pressure difference ΔPLSD detected by the pressure difference sensor 54 and the target pressure difference, a function generating section 161c which calculates the alteration amount ΔθL of the target value based upon this deviation Δ(PLS), and an integrator 161d which integrates this alteration amount ΔθL of the target value and outputs it as a target pump tilt angle θL for load sensing control.

The torque control section 162 comprises a deviation calculation device 162a which calculates the surplus torque ΔT from the deviation between the engine revolution speed Nr as detected by the engine revolution speed sensor 53 and the governor position Nrp as detected by the potentiometer 55, and based upon this deviation ΔT a target torque Tpo for preventing engine stalling is calculated by a target torque calculation section 162b. Further, the reciprocal of the pump output pressure Pp as detected by the pressure sensor 52 is calculated by a reciprocal calculating section 162c, and in a multiplier 162d this reciprocal and the target torque Tpo are multiplied together to determine θps. And finally this value θps is fed through a linear delay factor filter 162e so as to be output as a target pump tilt angle θT for input torque limit control.

The comparator 164a incorporated in the decision section 164 is so constructed as to output a high level signal when the pilot pressure Pi as detected by the pressure sensor 56 is higher than a previously set constant pressure value, and its output signal is fed to a non inverting input terminal of the AND gate circuit 164b. To the two other inverting input terminals of this AND gate circuit 164b there are fed, respectively, the signal from the brake switch SW2 and the signal from the forward/reverse changeover switch SW1. Thus, when:

(1) the brake switch SW2 is at its T terminal or its P terminal (the switch SW2 is outputting a low level signal), and:
(2) the forward/reverse changeover switch SW1 is at a position other than its N position, i.e. is at its F position or at its R position (the switch SW1 is outputting a low level signal), and:
(3) the above described pilot pressure Pi is higher than the predetermined pressure value (the comparator 164a is outputting a high level signal),

i.e. during vehicle propulsion, the output of the AND gate circuit 164b is high level and the contact t of a switch 166c which will be described hereinafter is connected; while on the other hand while performing work the output of the AND gate circuit 164b is low level and the contact d of the switch 166c is connected.

The maximum tilt angle setting circuit 166 comprises a tilt angle while performing work setting section 166a on which the previously determined maximum tilt angle θdmax while performing work is set, a maximum tilt angle during propulsion setting section 166b which outputs a maximum tilt angle θtmax during propulsion based upon the pump output pressure Pp, and a selection switch 166c which selects one or the other of the maximum tilt angle while performing work and the maximum tilt angle during propulsion and outputs a limit tilt angle θmax. The maximum tilt angle during propulsion setting section 166b, when the vehicle is being propelled down a slope and the pump pressure Pp becomes less than a fixed value Pr, sets the maximum tilt angle θtmax during propulsion to be the greater, the lower is this pressure.

The minimum value selection section 163 selects the minimum value from the target tilt angles θL and θT and θmax, and outputs it as a commanded tilt angle value θr to the servo control section 165. In the servo control section 165, the deviation Δθ between the commanded tilt angle value θr which was input and the tilt angle feedback value θs which is detected by the tilt angle sensor 51 is calculated in the deviation calculator 165a, and based upon this deviation Δθ an ON/OFF signal for the electromagnetic valves 42 and 43 is output from the function generation section 165b. In this manner, the tilt angle variation device 40 performs control so as to make the pump tilt angle θs agree with the commanded tilt angle value θr.

Next, the P-Q graph of the variable displacement hydraulic pump 1 in this embodiment will be explained.

With this embodiment, because, along with the target tilt angles θL and θT being output from the load sensing control portion 161 and the torque control section 162 respectively, the maximum tilt angle θmax is output from the maximum tilt angle setting circuit 166, and because the smallest of these values is selected in the minimum value selection section 163, therefore the maximum value of tilt angle is limited to this maximum tilt angle θmax. Now, as will be described hereinafter, although the maximum engine revolution speed during vehicle propulsion is arranged to be higher than the maximum engine revolution speed while performing work, nevertheless in order that the maximum pump output flow amount Qt1max during vehicle propulsion on level ground (pressure less than Pr) becomes in fact smaller than the maximum pump output flow amount Qdmax while performing work, the maximum tilt angle θt1max during vehicle propulsion on level ground is set to be lower than the maximum tilt angle θdmax while performing work. By this type of setting, the P-Q graph shown in Fig. 1A is obtained. In Fig. 1A, T is the P-Q graph during vehicle propulsion, while D is the P-Q graph while performing work. Now, because it is arranged that the maximum tilt angle θt2max when the vehicle is being propelled down a slope (the vehicle propulsion pressure less than Pr) is greater than the maximum tilt angle θt1max during vehicle propulsion on level ground, therefore, as shown in Fig. 1A, the maximum pump output flow amount Qtmax when the pressure is less than Pr shows a tendency to be somewhat increased from Qt1max in the direction of Qt2max.

Fig. 5 is a general view for explanation of the engine revolution speed control circuit portion 260 included in the above described controller 60 shown in Fig. 2.

The engine revolution speed control circuit portion 260 comprises two function generators 261T and 261D, a selection switch 262, a maximum value selection circuit 263, a delay control circuit 264, a servo control circuit 265, and a decision circuit 266 comprising AND gates 266a and 266b.

A signal representing the pilot pressure Pi detected by the pressure sensor 56 (also representing the amount θp by which the vehicle driving pedal is stepped upon) is input to the function generators 261T and 261D and the delay control circuit 264. The function generators 261T and 261D output revolution speeds Nt and Nd determined according to functions (revolution speed characteristics) L1 and L2 for the target revolution speed for the engine 21 as corresponding to the pilot pressure Pi. The function L1 is a vehicle propulsion revolution speed characteristic suitable for application during vehicle propulsion, while the function L2 is a working revolution speed characteristic suitable for application when performing work. With the function L1 the rise in revolution speed is steeper than with the function L2, and also the maximum revolution speed is set to be higher. Thus during performing work it is possible to control the engine revolution speed with the vehicle driving pedal 6a according to a revolution speed characteristic which is appropriate for performing work, while during vehicle propulsion it is possible to control the engine revolution speed with the vehicle driving pedal 6a according to a revolution speed characteristic which is appropriate for vehicle propulsion.

The selection switch 262 comprises a fixed contact X which is connected to the function generator 261T which outputs the revolution speed Nt according to the revolution speed characteristic L1 for use during vehicle propulsion, another fixed contact Y which is connected to the function generator 261D which outputs the revolution speed Nd according to the revolution speed characteristic L2 suitable for performing work, and a fixed ground contact Z which is connected to ground. When the fixed contact Z is connected, a revolution speed signal is selected which represents a low revolution speed lower even than idling speed. The switching over of this selection switch 262 is performed by signals from the AND gate 266a and from the AND gate 266b.

The non inverted input terminals of the AND gate 266a are connected to the W contact of the brake switch SW2 and to the neutral contact N of the forward/reverse changeover switch SW1. Further, the inverted input terminals of the AND gate 266b are respectively connected to the W contact of the brake switch SW2 and to the neutral N contact of the forward/reverse changeover switch SW1, and its non inverted input terminal is connected to the pressure sensor 56. As has been described above, when the brake switch SW2 is switched to its W position its W contact goes high level, while in its T or P position its W contact goes low level. When the forward/reverse changeover switch SW1 is switched to its neutral N position its neutral N contact goes high level, while in its F or its R position its N contact goes low level. When the vehicle driving pedal 6a is stepped upon, the signal from the pressure sensor 56 goes high level. Accordingly, the vehicle propulsion signal output by the AND gate circuit 266b goes high level during actual vehicle propulsion and the X terminal of the switch 262 is connected, while performing work the working signal output by the AND gate circuit 266a goes high level and the Y terminal of the switch 262 is connected.

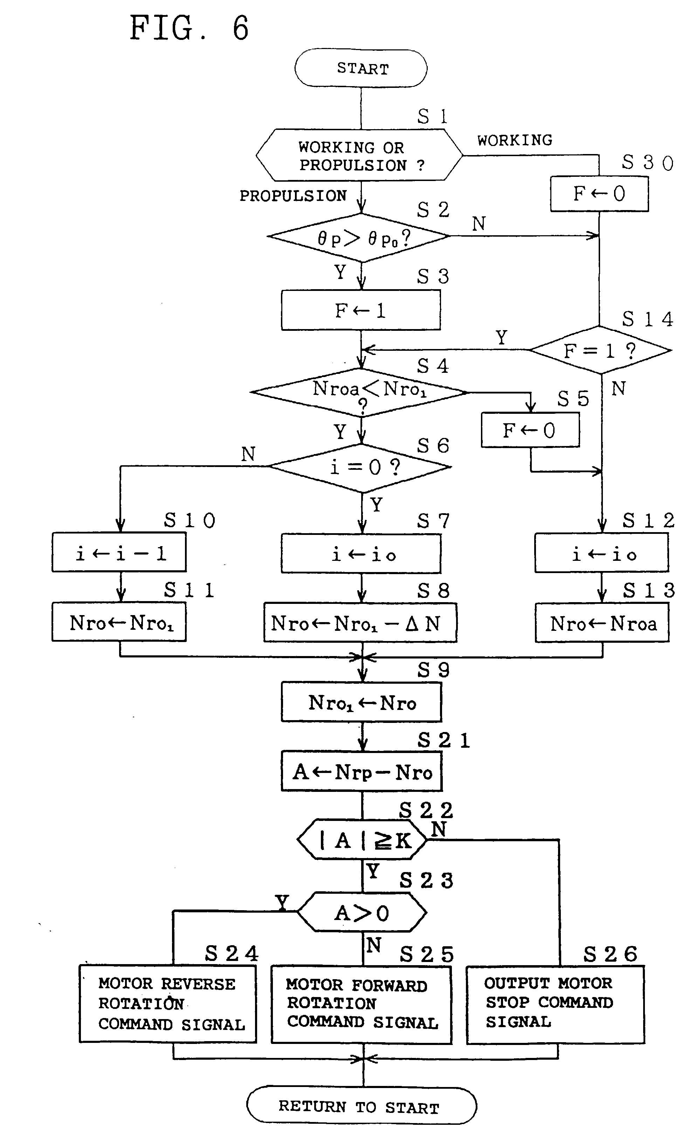

According to the switched position of the selection switch 262, either the engine revolution speed signal from one or the other of the function generators 262T and 262D or the low revolution speed signal from the fixed contact Z is selected and is input to the maximum value selection circuit 263. To the other input terminal of this maximum value selection circuit 263 there is also supplied the revolution speed No from the revolution speed setting device 57; and whichever of these is the greater is input to the delay control circuit 264 as the target revolution speed Nroa. Now, the maximum value of the revolution speed ordered on the revolution speed setting device 57 is limited to the maximum revolution speed of the revolution speed characteristic L2 suitable for performing work. The output signals from the AND gates 266a and 266b showing whether the current vehicle operational condition is the propulsion condition or the working condition, and the pilot pressure Pi showing the amount by which the vehicle driving pedal is stepped upon, are input to the delay control circuit 264; and this delay control circuit 264 calculates the target value Nro for the governor lever position and inputs it to the servo control circuit 265. The current value of engine revolution speed, i.e. the value of the detected position Nrp of the governor lever, is also input to the servo control circuit 265 from the above described potentiometer 55, and this servo control circuit 265 performs control according to the procedure shown in Fig. 6 to change the engine revolution speed to the target governor lever position value Nro. In other words, by the operation of both the circuits 264 and 265, slowdown control is performed only when the vehicle speed is decreasing, and in other circumstances normal revolution speed control is performed according to the amount by which the vehicle driving pedal is stepped upon. This slowdown control is a type of engine revolution speed control in which, during deceleration operation when the amount by which the vehicle driving pedal is depressed is decreasing, the engine revolution speed is reduced more slowly than the speed of the decrease in the amount by which the pedal is stepped upon.

Fig. 6 shows the control process when the delay control circuit 264 and the servo control circuit 265 are realized as a program. In the initial decision step S1, based upon the signals from the AND gates 266a and 266b, a decision is made as to whether the current vehicle operational state is the propulsion condition or the working condition. It is decided that the current vehicle operational condition is the working condition if the output signal from the AND gate 266a is high level, while it is decided that the current vehicle operational condition is the propulsion condition if the output signal from the AND gate 266b is high level. If the decision is made that the current vehicle condition is the propulsion condition, then the flow of control proceeds next to the decision step S2. When it is decided in the step S2 that the angle θp by which the pedal 6a is being depressed is greater than or equal to a fixed angle θpo, in the step S3 a speed reduction flag F is set to 1 and the flow of control proceeds to the decision step S4, in which a decision is made as to whether or not the current target revolution speed Nroa is less than its value Nro1 the previous time this control procedure was executed. The meaning at this point of Nroa being less than Nro1 is that the vehicle driving pedal is being operated in the direction of speed reduction, i.e. that a command is being given for speed reduction.

If the decision in the step S4 is NO, i.e. if it is decided that the vehicle driving pedal is not being operated in the direction of speed reduction, then in the step S5 the speed reduction flag F is set to 0, and the flow of control passes next to the step S12 to be described hereinafter; while if the decision in the step S4 is YES, i.e. if it is decided that the vehicle driving pedal is being operated in the direction of speed reduction, then the flow of control passes next to the decision step S6, in which a decision is made as to whether or not the value of a variable i is equal to zero. This variable i is for showing how many times this control loop of Fig. 6 has been repeated. Because the speed reduction flag F which was set to 1 in the step S3 is set to zero in the step S5 which comes after a NO decision in the decision step S4, therefore the meaning of this flag F being equal to 1 is that speed reduction is currently being performed.

If a YES decision is made in the step S6, next in the step S7 a determinate value io (with io>0) is loaded into the variable i, and next the flow of control proceeds to the step S8, in which Nro is set to Nro1-ΔN; and next the flow of control proceeds to the step S9. In this step S9 the present value of Nro is loaded into Nro1, and next the flow of control proceeds to the step S21. On the other hand, if in the decision step S6 a NO decision is made, then in the step S10 the value of the variable i is decremented by 1, in the next step S11 Nro is replaced by Nro1, and next the flow of control proceeds to the step S9.

However, if in the decision step S2 a NO decision is made, then in the decision step S14 a decision is made as to whether or not the speed reduction flag F is equal to 1. If the decision is YES, then next the flow of control proceeds to the step S4. On the other hand, if the decision is NO, then in the step S12 the constant value io is loaded into the variable i, and next the flow of control proceeds to the step S13, in which Nroa is loaded into Nro. Thereafter the flow of control proceeds to the step S9.

In the step S21, the difference Nrp Nro between the present governor lever position and the governor lever target value corresponding to the target revolution speed is determined, and the result is stored in the memory as a revolution speed difference A. In the step S22 a decision is made as to whether or not the absolute value of this result A is greater than or equal to a previously determined standard revolution speed difference K. If in the decision step S22 the result of the decision is YES, then the flow of control proceeds next to the decision step S23, in which a decision is made as to whether or not the revolution speed difference A is greater than zero. An affirmative result of this decision means that the present controlled revolution speed is greater than the target revolution speed Nro. Thus in the step S24 a signal is output to the pulse motor 22 to order it to rotate in the reverse direction by just the proper amount required to reduce the engine revolution speed from its present value by the previously determined revolution speed unit ΔN. This causes the pulse motor 22 to rotate in the reverse direction, and thereby the revolution speed of the engine 21 is reduced by just the amount ΔN. In this way, the maximum value ΔN for the above described revolution speed unit is the maximum revolution speed amount which can be incremented or decremented while one cycle through this program loop is executed.

On the other hand, a negative judgement in the decision step S23 means that the controlled revolution speed is lower than the target revolution speed Nro. Thus in the step S25 a signal is output to the pulse motor 22 to order it to rotate in the forward direction by just the proper amount required to increase the engine revolution speed from its present value by the above described revolution speed unit ΔN. This causes the pulse motor 22 to rotate in the forward direction, and thereby the revolution speed of the engine 21 is increased by just the amount ΔN. On the other hand, if in the decision step S22 the result of the decision is NO, then the flow of control proceeds next to the step S26, in which a motor stop signal is output, and thereby the revolution speed of the engine 21 is maintained at a constant value. After executing one or the other of the steps S24 through S26, the flow of control next returns back to the beginning of this program loop.

The above explained steps S1 through S14 represent the processing procedure of the delay control circuit 264, and the step S21 and the following represent the processing procedure of the servo control circuit 265.

Next, the operation of this embodiment constituted as described above will be explained.

Referring to Fig. 4, while performing work, because the brake switch SW2 is positioned at its W terminal, and moreover the forward/reverse changeover switch SW1 is set to its N position (the neutral position), thereby the output of the AND gate circuit 164b of the decision section 164 provided in the tilt angle control circuit section 160 is low level. Accordingly, the selection switch 166c selects the maximum tilt angle θdmax suitable for performing work, and the tilt angle of the hydraulic pump 1 is limited by θdmax (which is greater than θtmax). On the other hand, during vehicle propulsion, because the brake switch SW2 is switched over to its T terminal and moreover the forward/reverse changeover switch SW1 is switched over to a one of its positions other than its N terminal, i.e. to its F position or to its R position, then, when the vehicle driving pedal is stepped upon and its pilot pressure becomes greater than the predetermined value, the output of the AND gate circuit 164b goes high level. Due to this, the selection switch 166c selects the maximum tilt angle θtmax suitable for vehicle propulsion, and the tilt angle of the hydraulic pump 1 is limited by θtmax.

Both while performing work and during vehicle propulsion the engine revolution speed is controlled as will now be described. With the maximum revolution speed during vehicle propulsion being set higher than the maximum revolution speed while performing work, the necessary power for vehicle propulsion is assured.

Referring to Fig. 5, at the start of performing work the brake switch SW2 is shifted to its W position, and as described above the main brake device and the parking brake device which are not shown in the figures are both operated, so as to apply working braking. At this time, the forward/reverse changeover switch SW1 is set to its neutral position N, and the output of the AND gate 266a is high level, so that the selection switch 262 is switched over to its Y contact. As a result, the revolution speed characteristic L2 for use while performing work set in the function generator 261D is selected. On the other hand, in the situation in which along with the brake switch SW2 being switched over to its T position or to its P position the forward/reverse changeover switch SW1 is switched over to its forward propulsion position F or to its reverse propulsion position R, then when the pressure Pi is generated the output of the AND gate 266b goes high level, so that the selection switch 262 is switched over to its X contact. As a result, the revolution speed characteristic L1 for use during vehicle propulsion set in the function generator 261T is selected.

In any other situation than the two described above, the selection switch 262 is switched over to its Z contact, and the signal which represents a revolution speed lower than idling speed is selected. The revolution speed thus selected is input to the maximum value selection circuit 263 and is compared with the revolution speed No set on the revolution speed setting device 57, and the one of them which is the greater is selected as the target revolution speed Nroa. This target revolution speed Nroa is input to the delay control circuit 264 and the target revolution speed Nro is calculated; and this Nro is input to the servo control circuit 265. And, according to the procedure shown in Fig. 6, slowdown control is only performed for speed reduction during vehicle propulsion, and in other circumstances normal engine revolution speed control is performed.

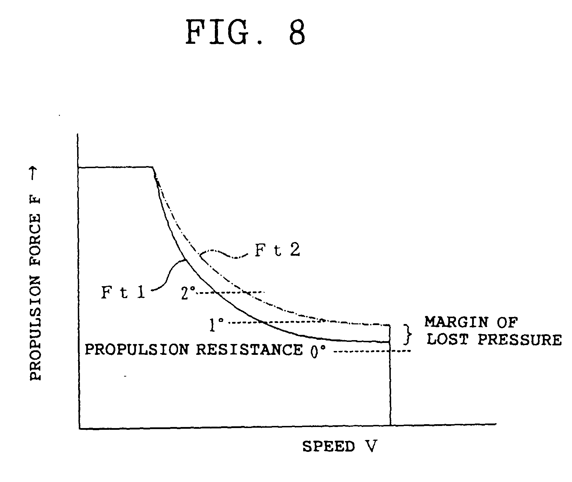

Accordingly, during vehicle propulsion on level ground at a fixed speed in the pressure region where the vehicle propulsion pressure is less than Pr, the maximum flow amount from the hydraulic pump 1 during vehicle propulsion is Qt1max as can be ascertained from Fig. 1A, while performing work it is Qdmax (which is greater than Qt1max); and the pressure loss during vehicle propulsion is diminished as compared with the prior art. Further, even though the displacement of the hydraulic motor is reduced by just the amount that the flow amount of the pump is diminished, it is possible to obtain the desired maximum speed, so that thereby the efficiency, including the motor volumetric efficiency, the torque efficiency, and the pressure loss as well, can be increased; and not only it is possible to obtain a desired torque for vehicle propulsion although the displacement of the hydraulic motor is reduced, but also the specific fuel consumption during vehicle propulsion along level ground is improved. Yet further, by reduction of the displacement of the hydraulic motor (for example from 90cc to 70cc), as shown in Fig. 8, the characteristic of the propulsion force with relation to the speed V is elevated from the curve Ft1 to the curve Ft2, and the propulsion force can be made proportionally larger just in correspondence to the proportional improvement in pressure loss, and thus the vehicle speed when it is being propelled up a slope is improved. And, yet further, because when the vehicle is being propelled down a slope, the pump pressure Pp is lower than the predetermined pressure value Pr, and the maximum tilt angle θtmax for vehicle propulsion becomes greater the less the pump pressure Pp becomes, thereby the maximum flow amount Qt2max of the pump is increased as shown in Fig. 1A so as to be higher than that during vehicle propulsion on level ground, whereby the maximum speed when the vehicle is being propelled down a slope can be faster than during vehicle propulsion on level ground. As shown by the broken double dotted line Tx in Fig. 1A, the operational benefit of the present invention is identical to that described above, even if the maximum flow amount Qt3max of the pump when the vehicle is being propelled down a slope exceeds the maximum flow amount Qdmax of the pump when performing work.

That is to say, when during vehicle propulsion the vehicle driving pedal 6a is operated in the direction to accelerate the vehicle, in the step S4 a NO decision is reached, and then in the step S13, because the value Nroa selected by the selection switch 262 is set as the value of the target revolution speed Nro, the engine revolution speed quickly increases according to the operation of the vehicle driving pedal 6a. On the other hand, when during vehicle movement the vehicle driving pedal 6a is operated in the direction to decelerate the vehicle, in the step S4 a YES decision is reached, and only when i=0 is the target revolution speed Nro set (in the step S8) to its value Nro1 the time round before decremented by ΔN (the revolution speed unit). The variable i is progressively decremented by one each time the step S10 is passed through, so that the step S8 is executed just once each time that the Fig. 6 control loop is repeated a predetermined number of times. Accordingly, the engine revolution speed is decreased in proportion with the passage of time.

Further, if in the step S1 a decision is made that work is being performed, then, the engine revolution speed is controlled by the loop including the steps S12, S13, S9, and the steps S21 through S26. Therefore even when the stepping on amount for vehicle movement is diminished slowdown control is not performed, but instead normal engine revolution speed control is executed, and thus the operational feeling is improved when controlling the engine revolution speed with the vehicle driving pedal while performing work.

With regard to the characteristic for the maximum tilt angle during propulsion setting section 166b, although with the above described embodiment the maximum tilt angle when the vehicle is being propelled down a slope is made greater in relation to pump pressure, so that the vehicle speed when being propelled down a slope is made greater as compared to the vehicle speed during propulsion on level ground. However, as an alternative, it would also be acceptable to set the maximum vehicle speed when being propelled down a slope to be the same as the maximum vehicle speed during vehicle propulsion on level ground, by setting the maximum tilt angle both during vehicle propulsion on level ground and while it is being propelled down a slope in the same way. Further, although in the above described embodiment the condition that the vehicle is being propelled down a slope is detected from the pressure of the pump, as an alternative it would also be acceptable for such detection to be performed from other phenomena characteristic of the vehicle thus being propelled down a slope.

Now, although with the above the amount of operation of the vehicle driving pedal 6a was detected by the use of a pilot pressure sensor 56, it would also be acceptable, for example, to detect this amount of operation by fixing a potentiometer or the like directly to the vehicle driving pedal 6a. Detection of the various other types of information is also not to be considered as limited to the methods described above. Further, the construction of the controller also is not limited to that described above. Again, although with the above the construction was such that a single forward/reverse changeover valve 8 was used which could take any one of three positions, it would also be acceptable for the construction to include two valves: a forward/reverse changeover valve which had two positions, and an opening and closing valve. Yet further, although with the above construction the vehicle propulsion state was recognized according to switching of the brake switch SW2 to any position other than its W position, according to switching over of the forward/reverse changeover switch to any position other than its N position, and according to operation of the vehicle driving pedal, it would also be acceptable to recognize the vehicle movement state only according to the condition of the brake switch, or alternatively only according to the condition of the forward/reverse changeover switch. Recognizing the working state according to detection of the actual operation of the parking brake device and the main brake device, or discriminating between the vehicle movement state and the working state from the actual position of the forward/reverse changeover valve 8, would also be acceptable. And furthermore, although the above explanations have all been made in terms of a wheel type hydraulic shovel, the present invention can also be applied in the same way to other types of hydraulically propelled vehicle.

- Embodiment 2 -

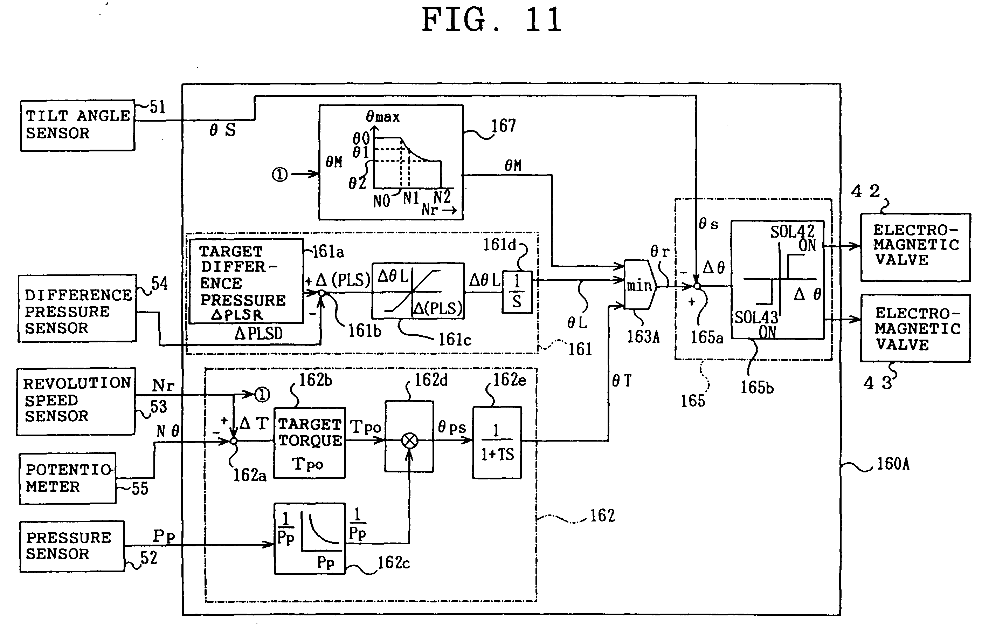

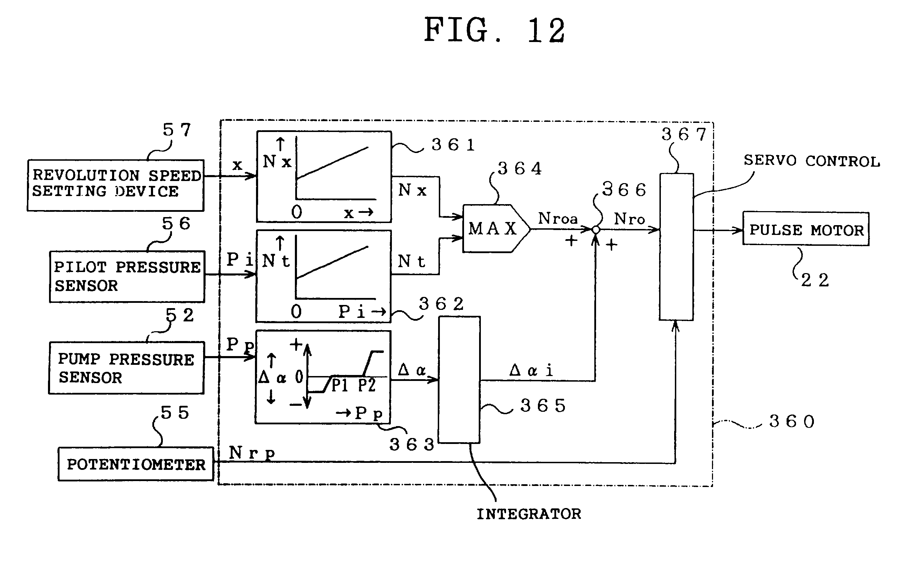

The controller 60 of the second embodiment comprises a tilt angle control circuit section 160A as shown in Fig. 11 and an engine revolution speed control circuit section 360 as shown in Fig. 12. The tilt angle control circuit section 160A is composed of a load sensing control section 161 (hereinafter referred to as the LS control section), a torque control section 162, a minimum value selection section 163A, a maximum tilt angle setting section 167, and a servo control section 165. The LS control section 161, the torque control section 162, and the servo control section 165 are the same as those of the first embodiment, and accordingly the description of these elements will be curtailed. The engine revolution speed control circuit section 360 will be described hereinafter.

The maximum tilt angle setting section 167 is constructed so as to output the maximum tilt angle θM based upon the engine revolution speed Nr which it receives as input from the engine revolution speed sensor 53, and it calculates θM from the following equation in order to obtain the standard flow amount Qtmax relating to the maximum revolution speed N1 during vehicle propulsion on level ground and the pump tilt angle θ1 in any revolution speed ranges.

$$\theta M=(\theta 1 \times N1)/Nr$$

Thus, until the engine revolution speed Nr reaches a predetermined value N0 (for example idling revolution speed), the maximum value θmax is output as the maximum tilt angle θM; while, in the region in which the engine revolution speed Nr exceeds the predetermined value N0, a maximum tilt angle θM is output which becomes smaller as the engine revolution speed Nr increases.

The minimum value selection section 163A selects the least value from the target pump angle θL, θT, and θM, and outputs it to the servo control section 165 as the commanded tilt angle value θr.

Fig. 12 is a general view for detailed explanation of the engine revolution speed control circuit section 360 included in the controller 60.

This engine revolution speed control circuit section 360 comprises three function generators 361 through 363, a maximum value selection circuit 364, an integrator 365, an adder 366, and a servo control circuit 367.

The function generator 361 outputs a target revolution speed Nx based upon the amount x of operation of the fuel lever 57a as commanded from the revolution speed setting device 57. The function generator 362 outputs a target revolution speed Nt based upon the pilot pressure Pi detected by the pressure sensor 56. The function generators 361 and 362 output target revolution speeds which are almost proportional to their input signals. The function generator 363 outputs a revolution speed correction Δα based upon the pump pressure Pp as detected by the pump pressure sensor 52.

If the pump pressure Pp is in a predetermined range less than P1, this function generator 363 outputs a negative revolution speed correction -Δα proportional to the pump pressure Pp. In the range from P1 to P2 the revolution speed correction Δα is zero, while in the range greater than P2 the function generator 363 outputs a positive revolution speed correction +Δα proportional to the pump pressure Pp. Here, the range less than P1 means that the vehicle is being propelled down a slope, the range from P1 to P2 means that the vehicle is being propelled along level ground, while the range greater than P2 means that the vehicle is being propelled up a slope.

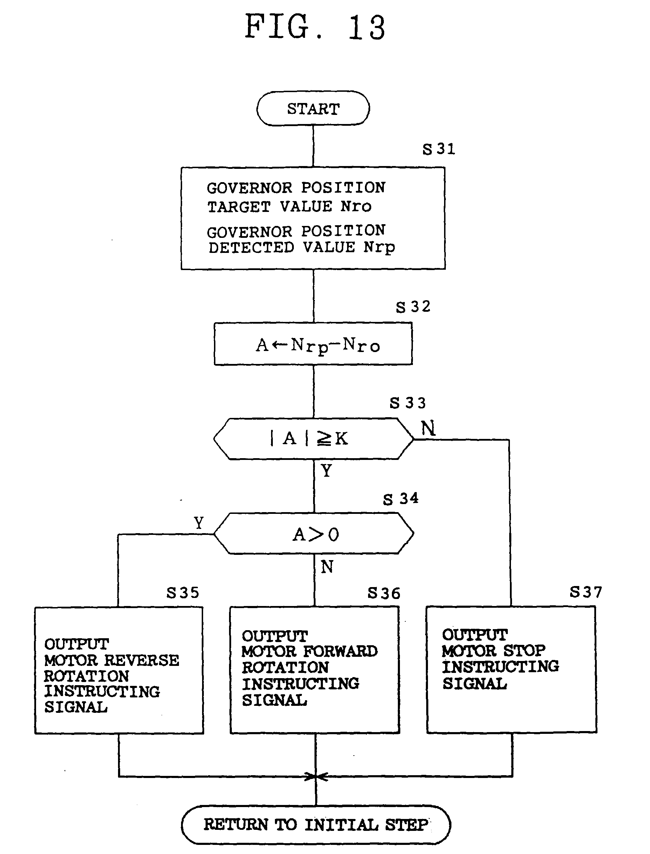

The maximum value selection circuit 364 selects the maximum value from the target revolution speed Nx and Nt, and inputs it to the adder 366 as the target revolution speed Nroa. The integrator 365 integrates the revolution speed correction Δα and inputs it to the adder 366 as Δαi. The adder 366 adds together the target revolution speed Nroa and the integrated revolution speed correction Δαi, and inputs it to the servo control circuit 367 as a governor lever position target value Nro. The current engine revolution speed from the above described potentiometer 55, i.e. the detected value Nrp of governor lever position, is also inputted to the servo control circuit 367, and control is performed according to the procedure shown in Fig. 13 to change the engine revolution speed to the governor lever position target value Nro.

Fig. 13 shows the control process when the servo control circuit 367 is realized as a program. In the step S31, the target value Nro for governor lever position and the detected value Nrp of governor lever position are read in. Next, in the step S32, the difference Nrp Nro between the present governor lever position and the governor lever position target value (which represents the target engine revolution speed) is calculated, and the result is stored in the memory as a revolution speed difference A. Subsequently in the decision step S33 a decision is made as to whether or not the absolute value of this revolution speed difference A is greater than or equal to a previously determined standard revolution speed difference K. If the result of the decision in this step S33 is YES, then the flow of control proceeds next to the decision step S34, in which a decision is made as to whether or not the revolution speed difference A is greater than zero. Since the affirmative result of this decision means that the present controlled engine revolution speed is higher than the target revolution speed Nro, in the step S35 a signal is output to the pulse motor 22 to order it to rotate in the reverse direction by just the proper amount required to reduce the engine revolution speed from its present value by the previously determined revolution speed unit ΔN. This causes the pulse motor 22 to rotate in the reverse direction, and thereby the revolution speed of the engine 21 is reduced by just the amount ΔN. In this way, the maximum value ΔN for the above described revolution speed unit is the maximum revolution speed amount which can be incremented or decremented while one cycle through this program loop is executed.

On the other hand, since the negative decision in the step S34 means that the controlled revolution speed is lower than the target revolution speed Nro, in the step S36 a signal is output to the pulse motor 22 to order it to rotate in the forward direction by just the proper amount required to increase the engine revolution speed from its present value by by the above described revolution speed unit ΔN. This causes the pulse motor 22 to rotate in the forward direction, and thereby the revolution speed of the engine 21 is increased by just the amount ΔN. On the other hand, if in the decision step S33 the result of the decision is NO, then the flow of control proceeds next to the step S37, in which a motor stop signal is output, and thereby the revolution speed of the engine 21 is maintained at a constant value. After executing one or the other of the steps S35 through S37, the flow of control next returns back to the beginning of this program loop.

Next, the operation of this embodiment constituted as described above will be explained.

During vehicle propulsion, the target revolution speed set according to the fuel lever 57a is left at minimum and the engine revolution speed is controlled by the use of the vehicle driving pedal 6a. Accordingly, the target revolution speed Nt output from the function generator 362 according to the pilot pressure Pi for vehicle propulsion is selected by the maximum value selection circuit 364.

During vehicle propulsion at constant speed on level ground, the pump pressure Pp is in the range from P1 to P2, and thus the revolution speed correction Δα from the function generator 363 is zero. Accordingly, the engine revolution speed is controlled to be the target revolution speed Nt depending upon the amount by which the vehicle driving pedal is depressed.

When the vehicle is being propelled up a slope and the pump pressure Pp takes on a value which exceeds the value P2, a positive revolution speed correction +Δα corresponding to the pump pressure Pp is outputted from the function generator 363. Accordingly, the integrated value of this revolution speed correction +Δα is added to the target revolution speed Nt determined by the amount by which the vehicle driving pedal is depressed, and the engine revolution speed is controlled to be somewhat higher than during vehicle propulsion on level ground. That is to say, the engine operates in a condition in which it develops a greater output power, as compared to the case of vehicle propulsion at constant speed on level ground.

When the vehicle is being propelled down a slope and the pump pressure Pp takes on a value which is lower than the value P1, a negative revolution speed correction -Δα corresponding to the pump pressure Pp is outputted from the function generator 363. Accordingly, the integrated value of this revolution speed correc-

tion $-\Delta\alpha$ is subtracted from the target revolution speed Nt determined by the amount by which the vehicle driving pedal is depressed, and the engine revolution speed is controlled to be somewhat lower than during vehicle propulsion on level ground.

In this case, if the maximum revolution speed according to the vehicle driving pedal 6a is designated as N1, according to the operation of the maximum tilt angle setting section 167 of Fig. 11, the maximum tilt angle $\theta M$ of the hydraulic pump 1 is limited by the angle $\theta 1$, so that at this maximum revolution speed N1 a limit speed of 35km/h is not exceeded. In other words, it is ensured that the maximum revolution speed during vehicle propulsion on level ground is limited to N1, and the maximum tilt angle during vehicle propulsion on level ground is limited to $\theta 1$. Accordingly, the maximum pump output flow amount Qtmax during vehicle propulsion on level ground is given by the equation:

$$\theta tmax = N1 \times \theta 1$$

When the vehicle is being propelled up a slope and the engine revolution speed becomes greater than N1, in order not to exceed the limit speed of 35 km/h, the maximum tilt angle $\theta M$ of the hydraulic pump 1 is reduced from $\theta 1$ by an amount corresponding to the engine revolution speed. If the maximum revolution speed when the vehicle is being propelled up a slope is designated as N2, and designating the maximum tilt angle as $\theta 2$, as described above Qtmax is given by the equation:

$$N2 \times \theta 2 = N1 \times \theta 1 = Qtmax$$

And, even in the range where N1<Ng<N2 and $\theta 1 > \theta g > \theta 2$, the engine revolution speed and the pump tilt angle can be properly matched together, so that Qtmax becomes equal to Ng x $\theta g$.

When the vehicle is being propelled down a slope and the engine revolution speed becomes less than N1, in the range up to the revolution speed N0, the maximum tilt angle $\theta M$ of the hydraulic pump 1 is increased from $\theta 1$ in accordance with the engine revolution speed not so as to exceed the limit speed of 35 km/h. In the range in which the revolution speed is less than N0, the maximum tilt angle $\theta M$ is limited by its maximum value $\theta max = \theta 0$. Also in this case Qtmax is given by the following equation:

$$N0 \times \theta 0 = N1 \times \theta 1 = Qtmax$$

And, even in the range where N0<Ng<N1 and $\theta 0 > \theta g > \theta 1$, the engine revolution speed and the pump tilt angle can be properly matched together, so that Qtmax becomes equal to Ng x $\theta g$.

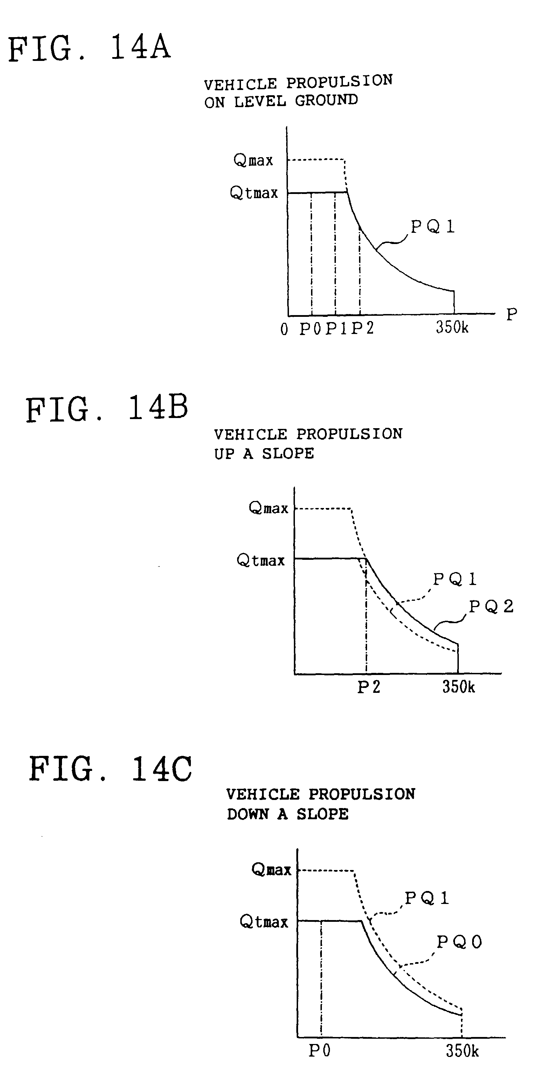

According to the above described method of controlling the engine revolution speed and the displacement of the hydraulic pump, the P-Q graphs for when the vehicle is being propelled along level ground, for when the vehicle is being propelled up a slope, and for when the vehicle is being propelled down a slope are respectively as in Figs. 14A through 14C. Now, referring to Figs. 14A through 14C, Qmax refers to the maximum flow amount which can be ejected from the hydraulic pump, when the engine revolution speed is at its maximum and also the pump tilt angle is at its maximum.

Fig. 14A is the P-Q graph when the vehicle is being propelled on the level ground. In order not to exceed the maximum output power at the engine revolution speed N1 the tilt angle control curve is set to be as shown by the line PQ1, and, as described above, because the maximum tilt angle $\theta max$ is limited to $\theta 1$, the output flow of the pump at the engine revolution speed N1 is controlled not to exceed the maximum value Qtmax. Accordingly, the portion of the flow graph shown by the broken line is elided.

Fig. 14B is the P-Q graph when the vehicle is being propelled up a slope. In order not to exceed the maximum output power at the engine revolution speed N2 the tilt angle control curve is set to be as shown by the line PQ2, and, as described above, because the maximum tilt angle $\theta max$ is limited to $\theta 2$, the output flow of the pump at the engine revolution speed N2 is controlled not to exceed the maximum value Qmax. Accordingly, the portion of the flow graph shown by the broken line is elided.

Fig. 14C is the P-Q graph when the vehicle is being propelled down a slope. In order not to exceed the maximum output power at the engine revolution speed N0 the tilt angle control curve is set to be as shown by the line PQ0, and, because the maximum tilt angle can be controlled to be increased until the hydraulic pump develops its maximum power value, thereby the maximum pump output flow Qtmax (=Qmax) is in this case as determined by the P-Q graph, and there is no overriding upper limit control therefor as there was in the case of the vehicle being propelled on the level ground or in the case of the vehicle being propelled up a slope.

Now, an explanation will be given relating to concrete operation, according to the tilt angle control of the variable displacement hydraulic pump 1 in this embodiment.

In the present embodiment, because, along with the target tilt angles $\theta L$ and $\theta T$ being outputted respectively from the load sensing control section 161 and the torque control section 162, the maximum tilt angle $\theta M$ is output from the maximum tilt angle setting circuit 167 and the smallest of these values is selected by the minimum value selection section 163A, the maximum value of tilt angle is limited by the maximum tilt angle $\theta M$. Further, along with the basic P-Q graph being set by the torque control section 162, the maximum revolution speed according to the vehicle driving pedal 6a is set to be N1, and when the vehicle is being propelled up a slope the engine is operated at a relatively high revolution speed as compared to when the vehicle is being propelled on level ground, while when the vehicle is being propelled down a slope the engine is operated at a relatively low revolution speed as compared to when the vehicle is being propelled on level ground; and by this the P-Q graphs shown in Figs. 14A through 14C are obtained.

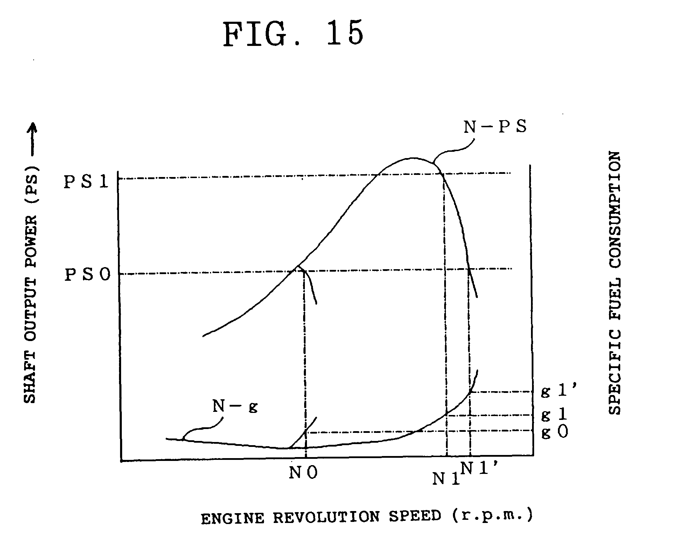

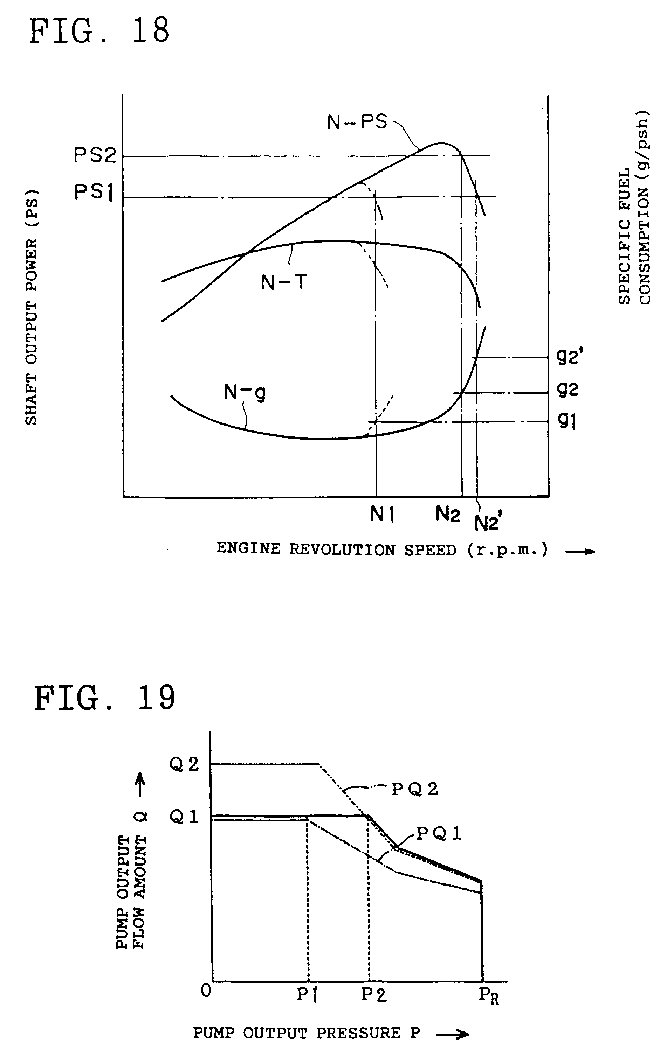

Fig. 15 is a graph for explanation of the elevation of the specific fuel consumption when the vehicle is being propelled down a slope, and corresponds to Fig. 18 which will be described hereinafter. I.e., during propulsion of the vehicle down a slope the engine revolution speed is decreased to N0, and the engine output power is reduced to the power PS0 required to be absorbed by the pump when descending a slope, so that the specific fuel consumption g0 when the vehicle is being propelled down a slope is shown to be increased so as to be greater than the specific fuel consumption g1 when the vehicle is being propelled along level ground.

Next, a detailed explanation will be given relating to this type of effect of improvement of specific fuel consumption.

The present inventors, in Japanese Patent Laying Open Publication Showa 63-167042, have previously proposed a hydraulic control device for a hydraulically propelled work vehicle such as a wheel type hydraulic shovel or the like, which improves fuel consumption during vehicle propulsion. A summary of that control device is as follows.

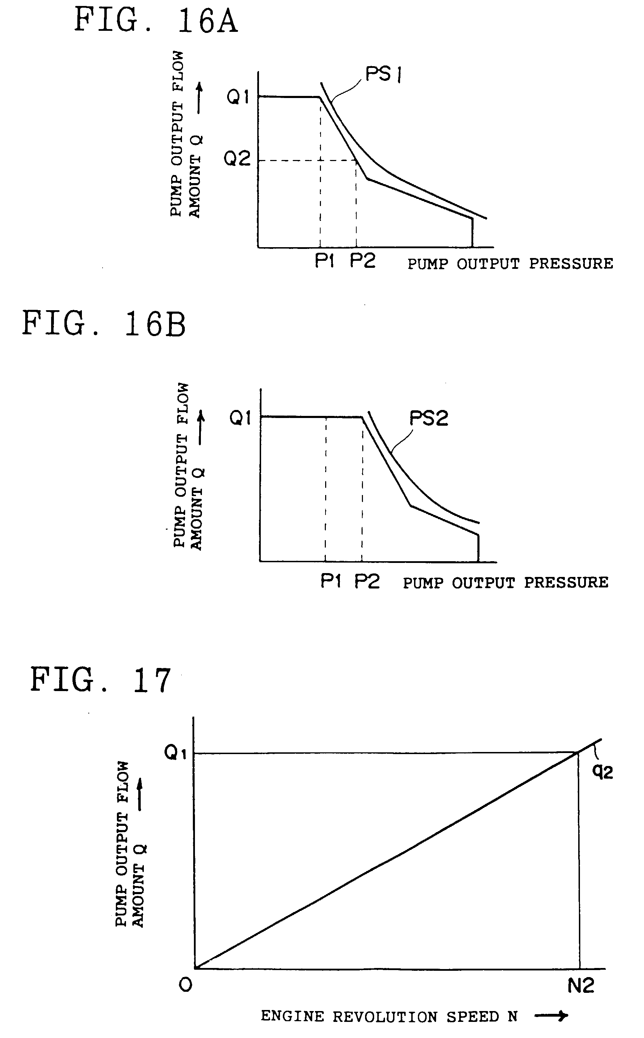

Now, when the pump output flow amount required when the vehicle is being propelled upwards at the speed limit of 35km/h along an upwardly sloping road with a certain gradient, and the required pressure, are determined as Q1 and P2 (which is greater than P1) respectively, then for example as shown in Fig. 16B the required power PS2 of the engine is determined; and further, the engine maximum revolution speed N2 and the maximum displacement q2 of the hydraulic pump are determined, and for example the graph of engine revolution speed versus pump output flow (the N-Q graph) may be as shown in Fig. 17.

Typically, the performance of the engine for the hydraulic type vehicle propulsion system which has the N⊢Q graph shown in Fig. 17 may be determined as shown in Fig. 18. As will be understood from the curve of revolution speed versus output power shown in Fig. 18, if the power required to be absorbed by the hydraulic pump when the vehicle is being propelled upwards at 35km/h along an upwardly sloping road with the certain gradient is designated by PS2, then this power will be developed when the engine revolution speed is equal to N2. And further, from the curve of engine revolution speed versus specific fuel consumption (the N-g graph), the specific fuel consumption at this time (g/PSh) will be understood to be equal to g2.

On the other hand, if the power absorbed by the hydraulic pump when the vehicle is being propelled at 35km/h along a level road by this kind of hydraulic type vehicle propulsion system is designated by PS1 (which is less than PS2), then it will be understood that, if the vehicle is propelled along a level road with the engine at full throttle, the engine revolution speed at this time will be N2' (which is greater than N2), and the specific fuel consumption will be g2' (which is greater than g2). That is to say, with these settings for the engine and the hydraulic system, during vehicle propulsion on level ground at 35km/h it is not desirable for the engine to be used in this bad specific fuel consumption region. Further if, in order to use the engine in its good specific fuel consumption region during vehicle propulsion on level ground, the engine revolution speed is lowered and the power graph is set to PS1 of Fig. 16A, then the load pressure becomes P2 and the pump output flow amount becomes Q2 when the vehicle is being propelled up a slope, and it is not possible to develop a speed equal to the speed limit of 35 km/h.

Thus, with reference to Japanese Patent Laying Open Publication Showa 63-167042, as shown in Fig. 19, until the load pressure reaches a predetermined value P1 corresponding to vehicle propulsion on level ground, the engine revolution speed is set to N1 so that the engine power becomes PS1 (the line PQ1 of the P-Q graph), and in the range where the load pressure exceeds the predetermined value P1, until the engine power becomes equal to PS2 (the line PQ2 of the P-Q graph), the engine revolution speed is increased according to the load pressure. At this time, in order not to exceed the speed limit, in other words in order for the pump output flow amount not to exceed Q1, the displacement is reduced along with the increase in engine revolution speed, and the P ⊦ Q graph shown by the solid line in Fig. 19 is obtained. By doing this, the optimal matching of the power absorbed by the hydraulic pump in correspondence to the load and the engine output power is performed, and the engine and the hydraulic pump are controlled in the operational conditions which provide the best specific fuel consumption (g1 in Fig. 18).

By the way, the load pressure when a wheel type hydraulic shovel is being propelled down a slope is also lower than during propulsion on level ground, so that the required power is PS0 which is less than PS1. Because of this, even if by using the above described system of Japanese Patent Laying Open Publication Showa 63-167042 the engine revolution speed is reduced as low as N1 during vehicle propulsion on level ground, nevertheless when the vehicle is being propelled down a slope as shown in Fig. 15 the engine revolution speed rises up to the value N1', and accordingly the specific fuel consumption becomes g1', i.e. is made worse. In this connection, the specific fuel consumption during vehicle propulsion on level ground at the engine revolution speed N1 is g1, which is less than g1'. I.e., with the prior art device described above, the power absorbed by the hydraulic pump when the vehicle is being propelled down a slope and the output power of the engine are not optimally matched from the point of view of specific fuel consumption. Therefore, as described above, by the engine revolution speed when the vehicle is being propelled down a slope being lowered down to N0, the specific fuel consumption is improved to g0.

Now, it should be understood that the above explained tilt angle control device 40 is not in any way limited in this embodiment, and it would be possible to use various well known types of tilt angle control device. Further, although in this embodiment the process was performed of reducing the engine revolution speed by integrating the negative correction therefor according to the load pressure when the vehicle was being propelled down a slope, various other methods might also be adopted. For example, the condition of vehicle propulsion down a slope might be detected from the signal from the brake switch, the forward/reverse changeover switch, the vehicle propulsion pilot pressure sensor, or the pump pressure sensor; and in such a case there is the possibility for the engine revolution speed to be lowered by the governor lever being driven mechanically. Further, although in the above described embodiment the vehicle speed was kept constant by the pump tilt angle being increased in accordance with reduction of the engine revolution speed, it would also be acceptable, in a region in which there was no problem about alteration in vehicle speed, for this correspondence with reduction in engine revolution speed not to be strictly reciprocal.

Industrial Applicability

The present invention can be generally applied to a work vehicle such as a wheel type hydraulic shovel or the like, in which pressurized hydraulic fluid is supplied from a hydraulic pump which is disposed in an upper rotating body portion thereof to a hydraulic motor for vehicle propulsion which is disposed in a lower moving body portion thereof.

## Claims

1. A control device for a hydraulically propelled work vehicle, comprising:

   an engine revolution speed control means (360) which controls the revolution speed of an engine (21);
   a variable displacement type hydraulic pump (1) which is driven by said engine (21);
   a displacement variation means (40) which varies the displacement of this variable displacement hydraulic pump (1);
   a displacement control means (160A) which determines a target displacement according to the operational state of the pump, and drive controls said displacement variation means (40); and,

   a hydraulic motor (4) for vehicle propulsion which is driven by hydraulic fluid ejected from said variable volume type hydraulic pump (1);
   characterized in that:
   said control device comprises a slope descending detection means (52) which detects when the vehicle is descending down a slope; wherein,
   when said detection means (52) detects that the vehicle is descending down a slope, said engine revolution speed control means (360) reduces the revolution speed of said engine (21) and said displacement control means (160A) limits the maximum displacement of said hydraulic pump (1) to a value higher than during vehicle propulsion on level ground at a constant speed.

2. A control device according to claim 1, further characterized in that:

   said control device further comprises a slope ascending detection means (52) which detects when the vehicle is ascending up a slope; wherein,
   When said detection means (52) detects that the vehicle is ascending up a slope, said engine revolution speed control means (360) increases the revolution speed of said engine (21) and said displacement control means (160A) limits the maximum displacement of said hydraulic pump (1) to a value lower than during vehicle propulsion on level ground at a constant speed.

## Patentansprüche

1. Steuereinrichtung für ein hydraulisch angetriebenes Arbeitsfahrzeug, wobei die Steuereinrichtung aufweist:

   eine Motorumdrehungsgeschwindigkeits-Steuereinrichtung (360), die die Umdrehungsgeschwindigkeit eines Motors (21) steuert;

   eine verstellbare hydraulische Pumpe (1), die von dem Motor (21) angetrieben ist;

   eine Verstelleinrichtung (40), die diese verstellbare hydraulische Pumpe (1) verstellt;

   eine Verstellungssteuereinrichtung (160A), die entsprechend dem Betriebszustand der Pumpe eine Sollverstellung bestimmt und die Verstelleinrichtung (40) antriebssteuert;

   einen hydraulischen Motor (4) zum Fahrzeugantrieb, der durch von der verstellbaren hydraulischen Pumpe (1) abgegebene Hydraulikflüssigkeit angetrieben ist;

dadurch gekennzeichnet, daß:

die Steuereinrichtung eine Neigungsabfall-Erfassungseinrichtung (52) aufweist, die einen Zustand erfaßt, in dem das Fahrzeug eine Neigung hinabfährt; wobei,

wenn die Erfassungseinrichtung (52) erfaßt, daß das Fahrzeug eine Neigung hinabfährt, die Motorumdrehungs-Steuereinrichtung (360) die Umdrehungsgeschwindigkeit des Motors (21) reduziert und die Verstelleinrichtung (160A) die Maximalverstellung der hydraulischen Pumpe (1) auf einen höheren Wert als bei einer Fahrzeugfortbewegung mit konstanter Geschwindigkeit auf ebenem Boden begrenzt.

2. Steuereinrichtung nach Anspruch 1, ferner dadurch gekennzeichnet, daß:

die Steuereinrichtung ferner eine Neigungsanstiegs-Erfassungseinrichtung (52) aufweist, die einen Zustand erfaßt, in dem das Fahrzeug eine Neigung hinauffährt; wobei,

wenn die Erfassungseinrichtung (52) erfaßt, daß das Fahrzeug eine Neigung hinauffährt, die MotorumdrehungsgeschwindigkeitsSteuereinrichtung (360) die Umdrehungsgeschwindigkeit des Motors (21) erhöht und die Verstellungssteuereinrichtung (160A) die Maximalverstellung der hydraulischen Pumpe (1) auf einen niedrigeren Wert als bei einer Fahrzeugfortbewegung bei konstanter Geschwindigkeit auf ebenem Boden begrenzt.

**Revendications**

1. Appareil de commande d'un véhicule de travaux à propulsion hydraulique, comprenant :

un dispositif (360) de réglage de vitesse de rotation du moteur qui règle la vitesse de rotation d'un moteur (21),
une pompe hydraulique (1) à déplacement variable qui est entraînée par le moteur (21),
un dispositif (40) de variation de déplacement qui fait varier le déplacement de la pompe hydraulique (1) à déplacement variable,
un dispositif (160A) de réglage de déplacement qui détermine un déplacement cible en fonction de l'état de fonctionnement de la pompe et commande l'entraînement du dispositif (40) de variation de déplacement, et
un moteur hydraulique (4) de propulsion du véhicule qui est entraîné par le fluide hydraulique provenant de la pompe hydraulique (1) du type à volume variable, caractérisé en ce que :
l'appareil de commande comporte un dispositif (52) de détection de descente de pente qui détecte que le véhicule descend une pente, et tel que
lorsque le dispositif de détection (52) détecte que le véhicule descend une pente, le dispositif (360) de réglage de vitesse de rotation du moteur réduit la vitesse de rotation du moteur (21) et le dispositif (160A) de réglage de déplacement limite le déplacement maximal de la pompe hydraulique (1) à une valeur supérieure qui est utilisée pendant la propulsion du véhicule sur terrain horizontal à vitesse constante.

2. Appareil de commande selon la revendication 1, caractérisé en ce que :

l'appareil de commande comporte en outre un dispositif (52) de détection de montée de pente qui détecte le moment où le véhicule monte une pente, et tel que
lorsque le dispositif de détection (52) détecte le fait que le véhicule monte une pente, le dispositif (360) de réglage de vitesse de rotation du moteur augmente la vitesse de rotation du moteur (21) et le dispositif (160A) de réglage de déplacement limite le déplacement maximal de la pompe hydraulique (1) à une valeur inférieure à celle qui est utilisée pendant la propulsion du véhicule sur sol horizontal à vitesse constante.

# FIG. 1A

# FIG. 1B

# FIG. 2

REVOLUTION SPEED
SETTING DEVICE

# FIG. 3

HYDRAULIC
PUMP 5

FORWARD/REVERSE
CHANGEOVER
VALVE 8

CJ

27      28

24

23      29

32

25      26      31

33      30

54

ΔPLS      ΔPLS

52      Pp

θs

θ      N

Nr 21a      22

41      ENGINE

53      21b      55

44      21      Nrp

TILT ANGLE 40
CONTROL DEVICE

42      43

60      CON-
TROLLER

PRESSURE SENSOR 56

Pi

BATTERY

P

SW2      W

x
NO

REVOLUTION
SPEED
SETTING
DEVICE

57a

T

FORWARD/REVERSE
CHANGEOVER
SWITCH SW1

57

# FIG. 4

EP 0 761 491 B1

# FIG. 5

EP 0 761 491 B1

# FIG. 6

START

S1 WORKING OR PROPULSION ?

WORKING → S30 $F \leftarrow 0$

PROPULSION

S2 $\theta_P > \theta_{P_0}$ ? — N

Y

S3 $F \leftarrow 1$

S14 $F = 1$ ? — Y / N

S4 $Nroa < Nro_1$ ? — Y / N

S5 $F \leftarrow 0$

S6 $i = 0$ ? — N / Y

S10 $i \leftarrow i - 1$

S7 $i \leftarrow io$

S12 $i \leftarrow io$

S11 $Nro \leftarrow Nro_1$

S8 $Nro \leftarrow Nro_1 - \Delta N$

S13 $Nro \leftarrow Nroa$

S9 $Nro_1 \leftarrow Nro$

S21 $A \leftarrow Nrp - Nro$

S22 $|A| \geqq K$ — N / Y

S23 $A > 0$ — Y / N

S24 MOTOR REVERSE ROTATION COMMAND SIGNAL

S25 MOTOR FORWARD ROTATION COMMAND SIGNAL

S26 OUTPUT MOTOR STOP COMMAND SIGNAL

RETURN TO START

# FIG. 7A

# FIG. 7B

21

# FIG. 8

# FIG. 9

# FIG. 10

F

G

COUNTER BALANCE VALVE

I

J

CONTROL VALVE FOR VEHICLE PROPULSION

D

CONTROL VALVE FOR WORKING

E

H

H

TILT ANGLE CONTROL DEVICE

A

ENGINE

B

C

FIG. 11

# FIG. 12

REVOLUTION SPEED SETTING DEVICE  57

PILOT PRESSURE SENSOR  56

PUMP PRESSURE SENSOR  52

POTENTIOMETER  55

361
362
363
364
365
366
367
360

$N_x$  $N_t$  $\Delta\alpha$  $\Delta\alpha i$

$N_{roa}$  $N_{ro}$

MAX

SERVO CONTROL

PULSE MOTOR  22

INTEGRATOR

$x$  $P_i$  $P_p$  $N_{rp}$

$N_x$  $N_t$  $\Delta\alpha$  0  $+$  $-$  P1 P2  $\rightarrow P_p$

EP 0 761 491 B1

# FIG. 13

START

S 31

GOVERNOR POSITION
TARGET VALUE Nro

GOVERNOR POSITION
DETECTED VALUE Nrp

S 32

$$A \leftarrow Nrp - Nro$$

S 33

$$|A| \geqq K$$   N

Y

S 34

$$A > 0$$

Y          N

S 35

OUTPUT
MOTOR REVERSE
ROTATION
INSTRUCTING
SIGNAL

S 36

OUTPUT
MOTOR FORWARD
ROTATION
INSTRUCTING
SIGNAL

S 37

OUTPUT
MOTOR STOP
INSTRUCTING
SIGNAL

RETURN TO INITIAL STEP

27

# FIG. 14A

VEHICLE PROPULSION
ON LEVEL GROUND

# FIG. 14B

VEHICLE PROPULSION
UP A SLOPE

# FIG. 14C

VEHICLE PROPULSION
DOWN A SLOPE

# FIG. 15

FIG. 16A

FIG. 16B

FIG. 17

# FIG. 18

# FIG. 19